# EUROPÄISCHE PATENTANMELDUNG

(11) **EP 2 557 287 A2**
(43) Veröffentlichungstag der Anmeldung: **13.02.2013**
(21) Anmeldenummer: 12176893.1
(22) Anmeldetag: 18.07.2012
(51) Int. Cl.: F01N 3/20

(54) **Verfahren zur Dosierung eines Reduktionsmittels**

(30) Priorität: 12.08.2011 DE 102011110056
(71) Anmelder: Emitec Gesellschaft für Emissionstechnologie mbH, 53797 Lohmar (DE)
(72) Erfinder: Hodgson, Jan, 53840 Troisdorf (DE); Bauer, Peter, 53721 Siegburg (DE)
(74) Vertreter: Rössler, Matthias

(57) **Zusammenfassung**

Die Erfindung betrifft ein Verfahren zur Dosierung eines Reduktionsmittels aus einer Dosiervorrichtung (1) in eine Abgasbehandlungsvorrichtung (3). Bei dem Verfahren wird zunächst zumindest ein Betriebsparameter (34) der Dosiervorrichtung (1) bestimmt. Dann wird ein Injektordruck (30) an einem Injektor (12) zur Zufuhr des Reduktionsmittels in die Abgasbehandlungsvorrichtung (3) aus dem mindestens einen Betriebsparameter (34) berechnet. Anschließend wird eine Öffnungszeit für den Injektor (12) berechnet, wobei zumindest der ermittelte Injektordruck (30) verwendet wird. Dann wird der Injektor (12) für die berechnete Öffnungszeit geöffnet.

## Beschreibung

Die Erfindung betrifft ein Verfahren zur Dosierung eines Reduktionsmittels aus einer Dosiervorrichtung in eine Abgasbehandlungsvorrichtung zur Reinigung der Abgase einer Verbrennungskraftmaschine und insbesondere zur Reinigung der Abgase einer mobilen Verbrennungskraftmaschine eines Kraftfahrzeuges.

Aufgrund strengerer Grenzwerte für die Emission von Schadstoffbestandteilen in Abgasen von (mobilen) Verbrennungskraftmaschinen gewinnen in letzter Zeit Abgasbehandlungseinrichtungen an Bedeutung, bei welchen zur Reinigung der Abgase ein Reduktionsmittel zugeführt wird, mit welchem bestimmte Schadstoffe im Abgas selektiv reduziert werden können. Ein in solchen Abgasbehandlungsvorrichtungen besonders häufig verwirklichtes Verfahren ist das Verfahren der selektiven katalytischen Reduktion (SCR-Verfahren, SCR: selective catalytic reduction). Bei diesem Verfahren werden Stickstoffoxidverbindungen im Abgas unter Zuhilfenahme eines Reduktionsmittels reduziert. Als Reduktionsmittel wird häufig Ammoniak verwendet. Ammoniak wird in einem Kraftfahrzeug aus Sicherheitsgründen häufig nicht direkt selbst bevorratet, sondern in Form einer Vorläuferlösung, welche abgasintern und/oder abgasextern in Ammoniak umgesetzt werden kann. Eine besonders häufig eingesetzte Reduktionsmittel-Vorläuferlösung ist eine Harnstoff-Wasser-Lösung. Eine 32,5 %ige Harnstoff-Wasser-Lösung zu diesem Zweck ist unter dem Handelsnahmen AdBlue^{®} erhältlich. Der Begriff "Reduktionsmittel" wird im Folgenden sowohl für das Reduktionsmittel selbst als auch für eine Vorläufersubstanz (aus der das Reduktionsmittel gebildet werden kann) verwendet.

Zur Zufuhr des Reduktionsmittels in die Abgasbehandlungsvorrichtung in flüssiger bzw. gasförmiger Form werden normalerweise Dosiervorrichtungen verwendet. Derartige Dosiervorrichtungen weisen regelmäßig einen Injektor auf, durch dessen Öffnungszeit die in die Abgasbehandlungsvorrichtung zugeführte Menge an Reduktionsmittel bestimmt wird. Die zugeführte Menge an Reduktionsmittel sollte möglichst genau einer in der Abgasbehandlungsvorrichtung benötigen Menge an Reduktionsmittel entsprechen. Diese benötigte Menge orientiert sich z. B. an der Abgasmenge, der Abgastemperatur und/oder der Abgaszusammensetzung.

Wenn eine Reduktionsmittelvorläuferlösung einer Abgasbehandlungsvorrichtung zugeführt wird, ist auch eine effektive Umsetzung der Reduktionsmittelvorläuferlösung zu dem eigentlichen Reduktionsmittel erforderlich. Dies geschieht bevorzugt innerhalb der Abgasbehandlungsvorrichtung, wobei das Reduktionsmittel der Abgasbehandlungsvorrichtung flüssig zugeführt wird und in der Abgasbehandlungsvorrichtung zunächst verdampft. Dafür ist es erforderlich, dass das Reduktionsmittel bei der Eindüsung in die Abgasbehandlungsvorrichtung fein und gleichmäßig zerstäubt wird. Für den Fall der Harnstoff-Wasser-Lösung kann die Umsetzung zu Ammoniak thermisch (Thermolyse) und/oder katalytisch unterstützt (Hydrolyse) erfolgen.

Hiervon ausgehend ist es Aufgabe der hier vorliegenden Erfindung, die geschilderten technischen Probleme des Standes der Technik weiter zu lindern. Es soll insbesondere ein besonders vorteilhaftes Verfahren zur Dosierung von Reduktionsmittel aus einer Dosiervorrichtung in eine Abgasbehandlungsvorrichtung offenbart werden, durch welches die Genauigkeit und/oder die Gleichmäßigkeit der Dosierung verbessert wird. Darüber hinaus sollen geeignete Verfahren zur Einrichtung eines Steuergeräts für eine Dosiervorrichtung offenbart werden.

Diese Aufgaben werden gelöst mit einem Verfahren zur Dosierung gemäß den Merkmalen des Patentanspruchs 1 sowie durch die Verfahren zur Einrichtung eines Steuergeräts nach den Patentansprüchen 7 und 8. Weitere vorteilhafte Ausgestaltungen der erfindungsgemäßen Verfahren sind in den abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Die Erfindung betrifft ein Verfahren zur Dosierung eines Reduktionsmittels aus einer Dosiervorrichtung in eine Abgasbehandlungsvorrichtung aufweisend zumindest die folgenden Schritte:
a) Bestimmen mindestens eines Betriebsparameters der Dosiervorrichtung,
b) Berechnen eines Injektordrucks an einem Injektor zur Zufuhr des Reduktionsmittels in die Abgasbehandlungsvorrichtung aus dem mindestens einen Betriebsparameter,
c) Berechnen einer Öffnungszeit für den Injektor, wobei zumindest der in Schritt b) ermittelte Injektordruck verwendet wird,
d) Öffnen des Injektors für die in Schritt c) berechnete Öffnungszeit.

Der in Schritt a) bestimmte Betriebsparameter der Dosiervorrichtung kann ein beliebiger Betriebsparameter der Dosiervorrichtung sein. Ein solcher Betriebsparameter kann z. B. auch ein Betriebsparameter eines Injektors zur Zufuhr des Reduktionsmittels in die Abgasbehandlungsvorrichtung sein. Ein solcher Injektor kann auch Bestandteil der Dosiervorrichtung sein. Beispielsweise kann der Betriebsparameter ein innerhalb der Dosiervorrichtung bestimmter Druck des Reduktionsmittels sein. Auch ist es möglich, dass der Betriebsparameter eine Pumpleistung einer Pumpe der Dosiervorrichtung ist. Als Betriebsparameter kann gegebenenfalls eine von der Dosiervorrichtung geförderte Menge an Reduktionsmittel berücksichtigt werden. Weiterhin ist es möglich, dass eine Temperatur des Reduktionsmittels in der Dosiervorrichtung verwendet wird. Auch möglich ist, dass ein elektrischer Strom, eine elektrische Spannung und/oder eine elektrische Leistungsaufnahme einer Förderpumpe der Dosiereinheit als Betriebsparameter berücksichtigt werden. Weiterhin können eine Position eines beweglichen Pumpenelementes, insbesondere die Position einer Pumpenmembran, eine Pumpeneinschaltzeit, eine Pumpenbetriebsfrequenz, eine Pumpenkolbenposition und/oder eine Bewegungsgeschwindigkeit eines beweglichen Pumpenelementes als Betriebsparameter berücksichtigt werden. Auch ist möglich, dass Werte aus einen Kennlinienfeld zur Steuerung der Position eines beweglichen Pumpenelementes verwendet werden.

Als Pumpe wird in Dosiervorrichtungen beispielsweise eine Kolbenpumpe oder eine Membranpumpe eingesetzt. Bei Kolbenpumpen wird ein Kolben auf und ab bewegt. Dadurch wird eine Pumpenkammer vergrößert und verkleinert und Reduktionsmittel wird durch eine Saugleitung in die Pumpenkammer gesaugt und durch eine Ausstoßleitung aus der Pumpenkammer heraus gedrückt. Die Förderrichtung der Pumpe wird durch entsprechende Ventile in der Saugleitung und in der Ausstoßleitung vorgegeben. Bei einer Membranpumpe wird die Pumpenkammer durch eine Bewegung der Membran vergrößert und verkleinert. Es gibt auch kombinierte Pumpen, bei welchen die Bewegung eines beweglichen Pumpenelementes über ein Übertragungsmedium (beispielsweise ein Fluid) auf eine Membran übertragen wird, welche dann wiederum die Pumpenkammer vergrößert und verkleinert. Der Antrieb der Membran bzw. des beweglichen Pumpenelementes kann beispielsweise über einen elektromagnetischen Linearantrieb erfolgen. Auch ist es möglich, dass der Antrieb über ein Pleuel oder einen Exzenter erfolgt, so dass die Bewegung eines Rotationsantriebes in eine lineare Bewegung der Membran bzw. des beweglichen Pumpenelementes umgesetzt wird.

Die in Schritt a) berücksichtigten Betriebsparameter können auch mit Kennlinien zum Betrieb der Dosiervorrichtung und insbesondere mit Kennlinien zum Betrieb des Injektors und einer Pumpe der Dosiervorrichtung bestimmt werden. Diese Kennlinien sind fest vorgegeben und beispielsweise in einem Steuergerät abgespeichert. Auch möglich ist, dass Regelparameter aus der Regelung der Pumpe und des Injektors als Betriebsparameter berücksichtigt werden.

Besonders bevorzugt ist das Verfahren, wenn als Betriebsparameter in Schritt a) zumindest eine Öffnungsdauer und/oder zumindest eine Schließdauer des Injektors zur Zufuhr des Reduktionsmittels zu einer Abgasbehandlungsvorrichtung verwendet werden.

Die Öffnungsdauer und die Schließdauer sind Steuerzeiten des Injektors. Diese Steuerzeiten sind abhängig von den vorliegenden Bedingungen an dem Injektor (bspw. Druck, Temperatur usw.). Die Öffnungsdauer kann auch Einschaltdauer genannt werden. Die Schließdauer kann auch Ausschaltdauer genannt werden. Die Öffnungs- bzw. Einschaltdauer gibt an, wie lange es dauert, bis der Injektor geöffnet ist, nachdem ein Öffnungssignal (beispielsweise eine Öffnungsspannung) an den Injektor angelegt wurde. Diese Steuerzeiten (Öffnungsdauer und Schließdauer) sind von der Öffnungszeit des Injektors zu unterscheiden. Die Öffnungszeit gibt an, wie lange der Injektor zwischen dem Öffnen und dem Schließen tatsächlich geöffnet ist. Die Schließ- bzw. Ausschaltdauer gibt an, wie lange es dauert, bis der Injektor geschlossen ist, nachdem ein Schließsignal (beispielsweise der Wegfall einer Öffnungsspannung) an den Injektor angelegt wurde. Die Öffnungsdauer und die Schließdauer des Injektors beeinflussen zu welchem Zeitpunkt der Injektor vollständig geöffnet ist. Durch die Berücksichtigung der Öffnungsdauer kann der Öffnungszeitpunkt des Injektors besonders exakt ermittelt werden. Die Öffnungsdauer und die Schließdauer hängen insbesondere maßgeblich von der Temperatur des Injektors und/oder dem am Injektor anliegenden Druck ab.

Weiterhin berücksichtigt werden können die Parameter eines Druckreglers, mit welchem der Druck des Reduktionsmittels in der Dosiervorrichtung geregelt wird. Der Druckregler kann zur Regelung des Drucks die Pumpe, ein Rücklaufventil, durch welches Reduktionsmittel zurück in den Tank gelangen kann und/oder den Injektor ansteuern. Der Druckregler kann den Druck mit einem differentialen Anteil, einem proportionalem Anteil und einem integrierten Anteil regeln. Für jeden dieser Anteile kann ein eigener Druckregelparameter verwendet werden (K_{D} für den differentialen Anteil, K_{P} für den proportionalen Anteil und K_{I} für den integrierenden Anteil). Die Druckregelparameter sind häufig in Abhängigkeit des Drucks von einer Steuereinheit bereits festgelegt. Es ist besonders vorteilhaft diese Parameter zusätzlich für das erfindungsgemäße Verfahren zu verwenden.

Als Betriebsparameter können weiterhin die druckabhängigen und temperaturabhängigen Eigenschaften einer Leitung verwendet werden, welche den Injektor mit der Pumpe und den weiteren Komponenten der Dosiervorrichtung verbindet.

In einigen Anwendungsfällen kann es ausreichend sein, wenn nur ein (einzelner) Betriebsparameter der Dosiervorrichtung bestimmt oder berücksichtigt wird. Regelmäßig ist aber bevorzugt, dass eine Mehrzahl oder in einer ganz speziellen Ausführungsform sogar alle oben angeführten Betriebsparameter berücksichtigt werden.

Bei der Berechnung des Injektordrucks in Schritt b) werden die in Schritt a) bestimmten Betriebsparameter in einer vorgegebenen Weise (Rechenvorschrift) miteinander verrechnet. Eine solche Rechenvorschrift kann beispielsweise in einem Steuergerät für das erfindungsgemäße Verfahren implementiert sein. Dieses Steuergerät kann beispielsweise auch eine Motorsteuerung eines Kraftfahrzeugs bzw. eine Motorsteuerung einer Verbrennungskraftmaschine eines Kraftfahrzeugs sein. Die in Schritt b) verwendete Rechenvorschrift ist vorzugsweise nach Art eines regelungstechnischen Modells aufgebaut, in welchem der in Schritt a) bestimmte mindestens eine Betriebsparameter als Eingangsgröße verarbeitet wird und der Injektordruck als Ausgangsgröße ausgegeben wird. Ein regelungstechnisches Modell kann aus einem Satz oder einem System von Differentialgleichungen bestehen, die einen Zusammenhang zwischen der Eingangsgröße und der Ausgangsgröße herstellen, wobei gegebenenfalls zumindest eine Zwischengröße existiert, die einen Zustand des regelungstechnischen Modells zwischen der Eingangsgröße und der Ausgangsgröße widerspiegelt. Als besonderer Vorteil des erfindungsgemäßen Verfahrens ist es möglich, dass die Zwischengrößen, welche einen Zustand des Modells wiedergeben, von den jeweiligen Treiberbausteinen des Steuergeräts gegebenenfalls auch für andere Anwendungen zur Verfügung gestellt werden können.

Bei der Berechnung der Öffnungszeit für den Injektor in Schritt c) wird der in Schritt b) ermittelte Injektordruck verwendet. Die durch den Injektor zugeführte Menge an Reduktionsmittel hängt in einem wesentlichen Maße von der Öffnungszeit des Injektors und der am Injektor vorliegenden Druck des Reduktionsmittels (der Injektordruck) ab. Der Injektor stellt im geöffneten Zustand eine Strömungsengstelle dar, durch welche das Reduktionsmittel aus der Dosiervorrichtung in die Abgasbehandlungsvorrichtung strömt. Die durch eine solche Engstelle strömende Reduktionsmittelmenge weist eine starke Abhängigkeit vom vorliegenden Injektordruck auf. Regelmäßig ist die durch den Injektor fließende Reduktionsmittelmenge proportional zu dem Injektordruck. Aus diesem Grund wirkt es sich stark negativ aus, wenn die Öffnungszeit des Injektors nicht auf den vorliegenden Injektordruck abgestimmt ist.

In Schritt d) erfolgt das Öffnen des Injektors normalerweise über eine magnetische Spule. Ein Injektor weist regelmäßig einen beweglichen Anker auf, welcher von einer magnetischen Spule in dem Injektor geöffnet werden kann.

Hiermit ist mit anderen Worten gemeint, dass keine Information über den Druck am Injektor direkt (z. B. mittels eines Sensors dort) gewonnen wird, sondern dass dieser (lokale) Injektordruck aus anderen Betriebsparametern bestimmt wird. Wie sich herausgestellt hat, treten direkt am Injektor erhebliche Temperaturschwankungen auf, weil der Injektor in unmittelbarer Nähe zu der Abgasbehandlungsvorrichtung angeordnet ist. Die Temperatur der Abgasbehandlungsvorrichtung schwankt aufgrund wechselnder Betriebszustände der Verbrennungskraftmaschine stark. Die Temperatur stellt regelmäßig einen signifikanten ("störenden") Quereinfluss auf die Genauigkeit der Druckmessung eines Drucksensors am Injektor dar. Aus diesem Grund ist es vorteilhaft, den Druck an dem Injektor nicht direkt selbst zu messen, sondern über eine Berechnung aus anderen Betriebsparametern der Dosiervorrichtung zu bestimmen.

Auch stehen in einer Dosiervorrichtung häufig ohnehin viele Parameter zur Verfügung, die im Rahmen des erfindungsgemäßen Verfahrens ohne konstruktiven Mehraufwand als Betriebsparameter verwendet werden können.

Zwischen dem Injektor und der Pumpe mit den weiteren Komponenten der Dosiervorrichtung liegt, wie weiter oben bereits erläutert, regelmäßig eine Leitung vor, mit welcher die Pumpe und die weiteren Komponenten mit dem Injektor verbindet. Diese Leitung bewirkt gegebenenfalls, dass der Druck in der Nähe der Pumpe und der Druck an dem Injektor voneinander abweichen können. Mit Hilfe des erfindungsgemäßen Verfahrens ist es aber trotzdem möglich, den Druck am Injektor präzise zu bestimmen. Häufig ist die Bestimmung des Drucks am Injektor mit dem erfindungsgemäßen Verfahren sogar genauer als mit Hilfe eines Drucksensors direkt am Injektor, weil die weitere oben beschrieben Quereinflüsse auf einen Drucksensor direkt am Injektor vermieden werden.

Besonders vorteilhaft ist das erfindungsgemäße Verfahren, wenn in Schritt c) zusätzlich ein Öffnungszeitpunkt und ein Schließzeitpunkt berechnet werden, und in Schritt d) der Injektor zu dem berechneten Öffnungszeitpunkt geöffnet bzw. zum berechneten Schließzeitpunkt geschlossen wird.

Weiter besonders vorteilhaft ist das Verfahren, wenn der Öffnungszeitpunkt und der Schließzeitpunkt so festgelegt werden, dass während einer Öffnungszeit zwischen dem Öffnungszeitpunkt und dem Schließzeitpunkt keine von der Pumpe ausgelöste Druckschwankung den Injektor erreicht. Vorzugsweise erreichen von der Pumpe ausgelöste Druckschwankungen den Injektor nur außerhalb der Öffnungszeit zwischen einem Schließzeitpunkt und dem darauf folgenden Öffnungszeitpunkt eines nächsten Öffnungsvorganges.

Der Injektordruck unterliegt häufig regelmäßigen oder unregelmäßigen Schwankungen. Diese Schwankungen werden gegebenenfalls von der Pumpe zur Förderung des Reduktionsmittels in der Dosiervorrichtung ausgelöst und können häufig nicht vermieden werden, sie sind jedoch mit dem erfindungsgemäßen Verfahren prognostizierbar. Die in Schritt a) bestimmten Betriebsparameter wirken sich erst zeitlich versetzt auf den Druck am Injektor aus. Wenn das erfindungsgemäße Verfahren ausreichend schnell ausgeführt wird, ist somit der Druck am Injektor zu einem in der Zukunft liegenden Zeitpunkt bekannt, bevor er am Injektor überhaupt auftritt. Dies kann insbesondere für ein besonders vorteilhaftes Sprühbild des Reduktionsmittels (Verteilung des Reduktionsmittels nach Verlassen des Injektors) in die Abgasbehandlungsvorrichtung vorteilhaft sein. Das Sprühbild eines Injektors hängt von dem anliegenden Injektordruck ab. Die Zufuhr von Reduktionsmittel kann genau dann erfolgen, wenn ein bestimmter Injektordruck vorliegt. Um einen bestimmten Injektordruck trotz der Druckschwankungen an dem Injektor sicher zu gewährleisten, ist es vorteilhaft, anhand des berechneten Injektordrucks auch einen Öffnungszeitpunkt für den Injektor zu bestimmen, zu welchem der gewünschte Injektordruck vorliegt. Es kann dann eine Vermeidung von Druckschwankungen während der Dosierung bzw. während des Zeitraums, in dem der Injektor offen ist, erreicht werden. Gleichzeitig können bei einer solchen vorbeugenden Vermeidung von Druckschwankungen während der Dosierung, zu Zeitpunkten, zu denen keine Dosierung erfolgt, größere Druckschwankungen akzeptiert werden. So kann der Aufwand für die Genauigkeit der Druckregelung in der Dosiervorrichtung reduziert werden.

Weiterhin ist das erfindungsgemäße Verfahren dann vorteilhaft, wenn in Schritt b) mindestens eine der folgenden Eigenschaften der Dosiervorrichtung berücksichtigt wird:
- zumindest eine Eigenschaft einer Leitung der Dosiervorrichtung zu dem Injektor,
- zumindest eine Eigenschaft einer Fördereinheit der Dosiervorrichtung,
- zumindest eine Eigenschaft einer Pumpe der Dosiervorrichtung,
- zumindest eine Eigenschaft eines Steuergerätes, welches zur Steuerung der Dosiervorrichtung eingerichtet ist.

Diese hier beschriebenen verschiedenen Eigenschaften der Dosiervorrichtung können in dem in Schritt b) verwendeten regelungstechnischen Modell als Parameter bzw. Systemkonstanten hinterlegt sein.

Als Eigenschaften einer Leitung der Dosiervorrichtung kommen beispielsweise die Länge der Leitung, das Volumen der Leitung, der Durchmesser der Leitung, die Flexibilität der Leitung in Abhängigkeit des vorliegenden Druckes, der vorliegenden Temperatur und/oder der Strömungswiderstand der Leitung bei verschiedenen Fördermengen an Reduktionsmittel in Betracht.

Als Eigenschaften der Fördereinheit kommen beispielsweise der Strömungswiderstand der Fördereinheit, die Förderleistung der Fördereinheit, das Volumen der Fördereinheit, die Flexibilität der Fördereinheit in Abhängigkeit des Druckes, die Temperatur der Fördereinheit und/oder beliebige weitere Eigenschaften der Fördereinheit in Betracht.

Als Eigenschaften der Pumpe kommen beispielsweise das Volumen der Pumpe, der Strömungswiderstand der Pumpe, das Gewicht eines beweglichen Ankers der Pumpe, die Dämpfung und die Federkonstante des Ankers der Pumpe, die elektrischen Eigenschaften einer Antriebsspule der Pumpe und/oder die zur Verfügung stehende Versorgungsspannung der Pumpe in Betracht.

Als Eigenschaften eines Steuergeräts kommen jegliche Eigenschaften des Steuergeräts wie beispielsweise zeitliche Verzögerungen, Signaldämpfungen, Signalverstärkungen, Rückkopplungen und/oder Signalveränderungen, die sich in Folge einer Analog-Digital-Umwandlung und/oder einer Digital-Analog-Umwandlung ergeben, in Betracht.

Besonders vorteilhaft ist das Verfahren, wenn als Eigenschaft der Dosiervorrichtung eine Elastizität und eine Länge der Leitung berücksichtigt werden.

Darüber hinaus ist das Verfahren besonders vorteilhaft, wenn die für das Verfahren berücksichtigte Elastizität der Leitung regelmäßig angepasst wird, um eine Alterung der Leitung zu berücksichtigen.

Bei einer Leitung, die Pumpe und Injektor verbindet, ist zusätzlich zu berücksichtigen, dass diese gegebenenfalls einer Alterung unterworfen ist. Insbesondere, wenn die Leitung ein Schlauch aus einem Kunststoff ist, ist es möglich, dass sich die Eigenschaften der Leitung, insbesondere die Flexibilität, durch Umwelteinflüsse verändert. Auch das Alter der Leitung kann daher im Rahmen des erfindungsgemäßen Verfahrens berücksichtigt werden.

Das Alterungsverhalten der Leitung kann unterschiedlich sein, je nachdem, wo die Leitung im Kraftfahrzeug verlegt ist. Beispielsweise altert eine Leitung, die im Unterbodenbereich eines Kraftfahrzeuges der Witterung ausgesetzt ist oder die gegebenenfalls sogar regelmäßig Sonnenlicht und UV-Strahlung ausgesetzt ist, erheblich schneller als eine Leitung, welche beispielsweise vollständig abgedeckt ist. Die tatsächliche Verlegung der Leitung durch das Kraftfahrzeug kann im Rahmen der Berücksichtigung der Alterung der Leitung auch berücksichtigt werden. Beispielsweise kann berücksichtigt werden, wie groß der geschützt verlegte Leitungsanteil und wie groß der ungeschützt verlegte Leitungsanteil ist.
Für die Alterung der Leitung können auch die Temperaturen und/oder die Fördermengen berücksichtigt werden, denen die Leitung bereits ausgesetzt war.

Es kann regelmäßig eine Adaptionsroutine ausgeführt werden, die die in Schritt b) berücksichtigten Parameter anpasst.

Bevorzugt ist das Verfahren auch dann, wenn zumindest die Berechnung des Injektordrucks in Schritt b) rückkopplungsfrei erfolgt. Vorzugsweise erfolgt die rückkopplungsfreie Berechnung des Injektordrucks in Schritt b) mit einem rückkopplungsfreien Modell. Man spricht auch von einem Modell mit einer Feed-forward-Eigenschaft.

Bei einem solchen Modell werden Ausgangsparameter des Modells nicht als Eingangsparameter des Modells verwendet. Aufgrund der Komplexität der in dem Modell abgebildeten Zusammenhänge kann eine Rückkopplung problematisch sein. Rechnerisch einfacher und kalkulierbarer ist ein rückkopplungsfreies Modell, welches durch Adaptionen regelmäßig angepasst wird. Somit können insbesondere folgende Einflüsse in einem rückkopplungsfreien Modell mit Adaptionen besser berücksichtigt werden, als in einem Modell mit Rückkopplung:
- Temperatureinflüsse,
- die Verlegung des Schlauches,
- die Alterung der Dosiervorrichtung,
- Spannungsschwankungen in der Versorgungsspannung der Dosiervorrichtung,
- wechselnde Fördermengen in einem Bereich von 0,001 l/h [Liter pro Stunde] bis 75 l/h [Liter pro Stunde], und
- Ungenauigkeiten der Pumpe und/oder des Injektors, welche sich beispielsweise als Leckage und Drift auswirken.

Gemäß einer Weiterbildung des Verfahrens, wird in Schritt c) zur Berechnung der Öffnungszeit zumindest einer der folgenden weiteren Parameter verwendet:
- die Temperatur des Reduktionsmittels,
- die Viskosität des Reduktionsmittels,
- zumindest eine physikalische Eigenschaft des Reduktionsmittels,
- zumindest eine chemische Eigenschaft des Reduktionsmittels, und
- eine benötigte Reduktionsmittelmenge.

Hier soll zunächst der Unterschied zwischen "Eigenschaften der Dosiervorrichtung" und "Parametern" erläutert werden. Parameter unterscheiden sich von Eigenschaften dadurch, dass sie im Wesentlichen variabel sind, während Eigenschaften fest vorgegebene Größen der Dosiervorrichtung sind oder zumindest weniger Schwankungen unterliegen als Parameter.

Die dargestellten Eigenschaften wirken sich auch auf die zugeführte Reduktionsmittelmenge und auf das Sprühbild des Injektors aus. Daher ist es vorteilhaft, diese Eigenschaften bei der Berechnung der Öffnungszeit in Schritt c) mit zu verwenden.

Besonders vorteilhaft ist es, die im Wesentlichen konstanten Eigenschaften der Dosiervorrichtung in Schritt b) in dem regelungstechnischen Modell zu berücksichtigen, während die variableren Parameter in Schritt c) berücksichtigt werden. So kann erreicht werden, dass in Schritt b) keine variablen Parameter berücksichtigt werden müssen. Dies vereinfacht die Struktur des regelungstechnischen Modells in Schritt b).

Weiterhin ist vorteilhaft, wenn in Schritt b) zumindest einer der folgenden Parameter als Quereinfluss berücksichtigt wird:
- Füllstand des Reduktionsmittels im Reduktionsmitteltank,
- Temperatur des Reduktionsmittels,
- Dichte des Reduktionsmittels,
- Viskosität des Reduktionsmittels,
- zumindest eine physikalische Eigenschaft des Reduktionsmittels,
- zumindest eine chemische Eigenschaft des Reduktionsmittels, und
- eine benötigte Reduktionsmittelmenge.

Die genannten Parameter können sich zumindest teilweise wie Veränderungen von Eigenschaften der Dosiervorrichtung auswirken. Daher kann es gegebenenfalls sinnvoll sein, die Parameter in Schritt b) als Quereinflüsse trotz der grundsätzlichen Verteilung von Eigenschaften auf Schritt b) und Parametern auf Schritt c) zu berücksichtigen.

Um den Rechenaufwand für das regelungstechnische Modell in Schritt b) möglichst gering zu halten, kann die Berücksichtigung der Parameter in Schritt b) beispielsweise dergestalt erfolgen, dass die Parameter nur berücksichtigt werden, wenn sie vorgegebene Grenzwerte überschreiten bzw. unterschreiten.

Ein Parameter, der insbesondere als Quereinfluss berücksichtigt werden sollte, ist die Viskosität des Reduktionsmittels. Bei erhöhter Viskosität des Reduktionsmittels fällt der Druck in der Dosiervorrichtung besonders stark ab. Außerdem werden Druckschwankungen in der Dosiervorrichtung besonders stark gedämpft. Die Viskosität des Reduktionsmittels ist zumindest teilweise von der Temperatur des Reduktionsmittels abhängig. Die Viskosität kann daher insbesondere anhand der (gemessenen und/oder berechneten) Temperatur bestimmt werden.

Im Rahmen der Erfindung wird auch ein Verfahren zur Einrichtung eines Steuergeräts für eine Dosiervorrichtung zur Dosierung eines Reduktionsmittels in eine Abgasbehandlungsvorrichtung vorgeschlagen, das zumindest die folgenden Schritte aufweist:
a) Entwurf einer Dosiervorrichtung für ein Reduktionsmittel,
b) Zerlegen der Dosiervorrichtung in einzelne Systemkomponenten,
c) Ermitteln von Wirkzusammenhängen zwischen den einzelnen Systemkomponenten,
d) Entwickeln von Modellbeschreibungen der einzelnen Systemkomponenten,
e) Erzeugen eines Systemmodells aus den einzelnen Modellbeschreibungen unter Berücksichtigung der Wirkzusammenhänge, und
f) Einrichtung des Systemmodells in dem Steuergerät.

Mit einem Systemmodell ist hier insbesondere ein regelungstechnisches Systemmodell gemeint, welches die Wirkzusammenhänge innerhalb der Dosiervorrichtung wiedergibt. Nachfolgend ist ein analytischer Ansatz zur Entwicklung eines derartigen Systemmodells beschrieben: Die Dosiervorrichtung wird in Schritt b) gedanklich in einzelne Systemkomponenten zerlegt, deren regelungstechnisches Verhalten jeweils separat bestimmt wird. Dies kann anhand bekannter Eigenschaften der Systemkomponenten erfolgen. Beispielsweise ist für eine vorgegebene (und im Betrieb zu erwartende) Strömungsgeschwindigkeit die Durchflussdauer des Reduktionsmittels durch eine Leitung bestimmbar, wenn die Länge der Leitung bekannt ist. Daher kann anhand der Länge der Leitung und der Strömungsgeschwindigkeit durch die Leitung eine Verzögerungszeit der Leitung als Systemeigenschaft bestimmt werden. Ein am Beginn der Leitung anliegender Druck liegt am Ausgang der Leitung um diese Verzögerungszeit zeitlich versetzt an. Die einzelnen Systemkomponenten stehen in der Dosiervorrichtung in Wirkzusammenhängen. Auch diese Wirkzusammenhänge sind analytisch ermittelbar. Beispielsweise kann angegeben werden, wie sich eine bestimmte Bewegung des Ankers der Pumpe auf den Druck in der Pumpkammer auswirkt. Die Wirkzusammenhänge können besonders vorteilhafterweise in Form von Differentialgleichungen angegeben werden.

Mit Hilfe der Wirkzusammenhänge können die einzelnen Systemkomponenten zu einem vollständigen Systemmodell zusammengesetzt werden. Dies geschieht in Schritt e).

Das Zusammensetzen des Systemmodells kann insbesondere auf zwei Arten erfolgen. Ein Ansatz ist für jede Systemkomponente einen Satz Differentialgleichungen zu bilden. Die jeweiligen Parameter der Differentialgleichungen einer Systemkomponente charakterisieren dann die Systemkomponente. Die einzelnen Differentialgleichungen der Systemkomponenten können dann zusammengesetzt werden und bilden so das vollständige Systemmodell. Nach einem weiteren Ansatz ist es möglich, die Differentialgleichungen der einzelnen Systemkomponenten zunächst in einem Vorberechnungsverfahren in Tabellen umzurechnen. Diese Tabellen können dann miteinander verknüpft werden. Ein Steuergerät kann Differentialgleichungen regelmäßig nur mit erhöhtem Aufwand lösen. Daher ermöglicht der Ansatz die Differentialgleichungen zunächst für jede Systemkomponente einzeln in Tabellen umzurechnen, den Rechenaufwand für Schritt e) zu reduzieren.

Einem weiteren Aspekt der Erfindung folgend, wird zudem ein Verfahren zur Einrichtung eines Steuergeräts für eine Dosiervorrichtung zur Dosierung eines Reduktionsmittels in einer Abgabehandlungsvorrichtung angegeben, das zumindest die folgenden Schritte umfasst:
a) Entwurf einer Dosiervorrichtung für ein Reduktionsmittel,
b) Beaufschlagen der Dosiervorrichtung mit einem Eingangssignal,
c) Aufzeichnen des Ausgangssignals der Dosiervorrichtung aufgrund des Eingangssignals,
d) Entwickeln eines Systemmodells, welches einen Zusammenhang zwischen dem Eingangssignal und dem Ausgangssignal herstellt, und
e) Einrichten des Systemmodells in dem Steuergerät.

Hier ist nun ein experimenteller Ansatz zur Bestimmung eines geeigneten Systemmodells beschrieben. Vorzugsweise wird hierbei von einem linearen Verhalten der Dosiervorrichtung ausgegangen. Das heißt insbesondere, dass im Betriebsbereich das Eingangssignal und das Ausgangssignal der Dosiervorrichtung über lineare Differentialgleichungen miteinander in Beziehung stehen.

Besonders vorteilhafterweise kann der Zusammenhang zwischen dem Eingangssignal und dem Ausgangssignal zumindest mit Hilfe von einem Parameter für eine Systemverstärkung und einem Parameter für eine Phasenverschiebung charakterisiert werden.

Diese Eingangssignale treten normalerweise regelmäßig wiederholt mit einer durch die Fördermenge bedingten Frequenz auf, die insbesondere durch die pulsartige Förderung der Förderpumpe bedingt ist. Die Verstärkung und die Phasenverschiebung des Ausgangssignals gegenüber dem Eingangssignal können in Abhängigkeit von dieser Frequenz in einem Bode-Diagramm dargestellt werden. Die Eigenschaften eines Systemmodells können somit in einem Bode-Diagramm dargestellt werden.

Ein solches Systemmodell kann in einem Steuergerät implementiert sein. Der experimentelle Ansatz kann ohne komplizierte theoretische Betrachtungen der Dosiervorrichtung durchgeführt werden.

In einer besonders vorteilhaften Verfahrensführung des Verfahrens zur Einrichtung eines Steuergeräts können auch der analytische Ansatz und der experimentelle Ansatz zur Bestimmung eines Systemmodells miteinander kombiniert werden. Die Dosiervorrichtung kann in einzelne Systemkomponenten zerlegt werden, für welche jeweils experimentell einzelne Komponentenmodelle ermittelt werden. Solche Komponentenmodelle können beispielsweise ein Leitungsmodell, ein Dosiersystemmodell und/oder ein Dosiervorrichtungsmodell, ein Pumpenmodell und/oder ein Steuerungsmodell sein. Die einzelnen so bestimmten Modelle können dann in einem weiteren Schritt zu einem Systemmodell zusammengesetzt werden, wobei hierzu wieder eine analytische Vorgehensweise verwendet wird. Dies stellt einen gemischt analytischen und experimentellen Ansatz zum Entwurf eines regelungstechnischen Modells dar.

Die Fördermenge einer Dosiervorrichtung kann nicht nur durch die Förderfrequenz beeinflusst werden. Häufig ist es auch möglich, die Fördermenge dadurch zu beeinflussen, dass die Pumpe nicht im Vollhubbetrieb, sondern (wenigstens zweitweise) im Teilhubbetrieb betrieben wird. Man kann von einer Veränderung der Fördermenge durch eine Veränderung des Pumpenhubs sprechen. Diese Möglichkeit ist abhängig von der Pumpenbauform gegeben. Manche Pumpentypen sind für einen Betrieb im Teilhub geeignet. Wenn die Fördermenge sowohl durch eine Veränderung der Förderfrequenz als auch durch eine Veränderung der Pumpenfrequenz möglich ist, so besteht die Möglichkeit zu entscheiden, welcher Weg zur Veränderung der Fördermenge verwendet werden soll.

Diese Entscheidung kann in Abhängigkeit von zumindest einem der folgenden Parameter fallen:
- einer Versorgungsspannung der Pumpe,
- einer Versorgungsspannung des Injektors,
- einer Temperatur der Pumpe,
- einer Temperatur des Injektors,
- einen Solldruck in der Dosiervorrichtung,
- einem Istdruck in der Dosiervorrichtung,
- einer Abweichung zwischen Solldruck und Istdruck, und
- einer Fördermenge.

Die für das erfindungsgemäße Verfahren zur Dosierung eines Reduktionsmittels und für die erfindungsgemäßen Verfahren zur Einrichtung eines Steuergeräts jeweils einzeln aufgeführten Merkmale sind jeweils auf die anderen beschriebenen Verfahren anwendbar und übertragbar. Insbesondere sind die erfindungsgemäßen Verfahren zur Einrichtung eines Steuergerätes dazu geeignet ein Steuergerät einzurichten, das zur Durchführung des erfindungsgemäßen Verfahrens zur Dosierung geeignet ist.

Als bevorzugtes Anwendungsgebiet der Erfindung wird ein Kraftfahrzeug angegeben, aufweisend eine Verbrennungskraftmaschine, eine Abgasbehandlungsvorrichtung zur Reinigung der Abgase der Verbrennungskraftmaschine und eine Dosiervorrichtung zur Dosierung eines Reduktionsmittels in die Abgasbehandlungsvorrichtung sowie ein Steuergerät, das zur Durchführung eines erfindungsgemäßen Verfahrens zur Dosierung von Reduktionsmittel eingerichtet ist.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: ein Kraftfahrzeug aufweisend eine Dosiervorrichtung für das erfindungsgemäße Verfahren,
- Fig. 2:: eine Pumpe für eine Dosiervorrichtung,
- Fig. 3:: ein regelungstechnisches Schlauchmodell,
- Fig. 4:: ein regelungstechnisches Systemmodell,
- Fig. 5:: ein Bode-Diagramm, das den Zusammenhang zwischen einem Eingangssignal und einem Ausgangssignal herstellt.

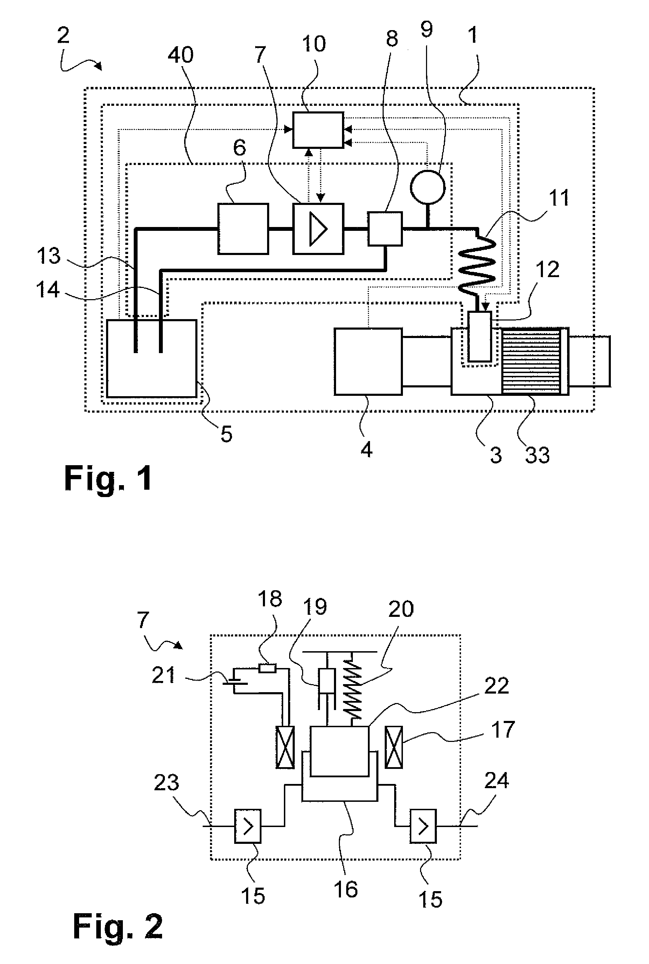

Fig. 1 zeigt ein Kraftfahrzeug 2, aufweisend eine Verbrennungskraftmaschine 4 und eine Abgasbehandlungsvorrichtung 3 zur Reinigung der Abgase der Verbrennungskraftmaschine 4. Darüber hinaus hat das Kraftfahrzeug 2 eine Dosiervorrichtung 1, die (flüssiges) Reduktionsmittel (insbesondere eine Harnstoff-Wasser-Lösung) aus einem Reduktionsmitteltank 5 über einen Injektor 12 der Abgasbehandlungsvorrichtung 3 zuführt, insbesondere in Strömungsrichtung (unmittelbar) vor einem Katalysator 33 mit einer SCR-Beschichtung. Die Dosiervorrichtung 1 umfasst insbesondere den Reduktionsmitteltank 5, eine Fördereinheit 40, einen Injektor 12, sowie eine Leitung 11 zur Förderung von Reduktionsmittel von der Fördereinheit 40 zu dem Injektor 12. In der Fördereinheit 40 sind in Förderrichtung des Reduktionsmittels in einer Zulaufleitung 13 hintereinander ein Filter 6, eine Pumpe 7 sowie ein Rücklaufventil 8 und ein Sensor 9 angeordnet. An dem Rücklaufventil 8 zweigt eine Rücklaufleitung 14 ab, durch die Reduktionsmittel aus der Fördereinheit 40 hinaus zurück in den Reduktionsmitteltank 5 gefördert werden kann.

Verschiedenen Komponenten der Dosiervorrichtung 1 stehen zudem mit einem Steuergerät 10 in Verbindung. Insbesondere die aktiven Komponenten der Dosiervorrichtung 1, wie beispielsweise die Pumpe 7 und/oder der Injektor 12, können von dem Steuergerät 10 bedarfsgerecht kontrolliert bzw. betätigt werden. Von verschiedenen Komponenten der Dosiervorrichtung 1, wie beispielsweise der Pumpe 7, dem Injektor 12, dem Reduktionsmitteltank 5 oder dem Sensor 9, erhält das Steuergerät 10 Informationen, die zur Steuerung der Pumpe 7 bzw. des Injektors 12 verwendet werden können. Von dem Reduktionsmitteltank 5 kann beispielsweise eine Information über den Füllstand an das Steuergerät 10 weitergegeben werden. Der Sensor 9 kann beispielsweise einen Reduktionsmitteldruck in der Fördereinheit 40 und/oder eine Temperatur des Reduktionsmittels in der Fördereinheit 40 bestimmen. In dem Steuergerät 10 ist ein regelungstechnisches Modell vorgesehen, welches anhand von den verschiedenen Informationen aus der Fördereinheit 40 eine Information über den Reduktionsmitteldruck an dem Injektor 12 generiert.

Fig. 2 zeigt eine Pumpe 7 für eine Dosiervorrichtung für ein Reduktionsmittel. Anhand der Pumpe 7 soll beispielhaft gezeigt werden, wie mit Hilfe eines analytischen Verfahrens ein regelungstechnisches Modell einer Systemkomponente ermittelt werden kann. Die Pumpe 7 weist einen Pumpeneingang 23 und einen Pumpenausgang 24 auf, die jeweils in fluidischer Verbindung zu einem Pumpenzylinder 16 stehen. Die Förderrichtung durch die Pumpe 7 wird durch Ventil 15 vorgegeben, welches sich am Pumpeneingang 23 und am Pumpenausgang 24 befindet und sich nur in Förderrichtung öffnet. Die Förderung in dem Pumpenzylinder 16 erfolgt über eine Bewegung des Pumpenkolbens 22. Es kann nun analytisch bestimmt werden, wie sich ein bestimmter, aktueller Druck am Pumpenkolben 22 (aktuell und/oder später) auf den Druck am Pumpenausgang 24 auswirkt. Der Druck am Pumpenkolben 22 hängt im Wesentlichen von den auf den Pumpenkolben 22 ausgeübten Kräften ab. Diese Kräfte ergeben sich zum einem durch die Massenträgheit des Pumpenkolbens. Darüber hinaus existiert eine elektrische Antriebskraft auf den Pumpenkolben 22, die von der Spule 17 ausgeübt wird. Weiterhin existiert eine Dämpfungskraft, die von dämpfenden Effekten hervorgerufen wird, welche auf den Pumpenkolben 22 wirken. Derartige dämpfende Effekte können beispielsweise die Reibung des Pumpenkolbens 22 und/oder die Verdrängung des Reduktionsmittels in dem Pumpenzylinder 16 während der Förderung sein. Die dämpfenden Effekte sind hier mit dem Dämpfer 19 zusammenfassend dargestellt. Darüber hinaus existieren Federkräfte, die auf den Pumpenkolben 22 wirken, die hier beispielhaft anhand der Feder 20 dargestellt sind. Solche Federkräfte ergeben sich beispielsweise, weil das Reduktionsmittel teilweise kompressibel ist und/oder weil die Kraft des Pumpenkolbens 22 über ein elastisches Übertragungsfluid auf das Reduktionsmittel übertragen wird. Solche elastischen Eigenschaften können sich allerdings auch ergeben, weil an dem Pumpenkolben 22 eine Feder 20 vorgesehen ist, um den Pumpenkolben 22 nach der Durchführung eines Förderhubs zurück in eine Ausgangslage zu bewegen. Die Kräfte auf den Pumpenkolben 22 sind teilweise von der Position bzw. die Auslenkung des Pumpenkolbens 22 abhängig. Dies gilt beispielsweise für Federkräfte. Teilweise sind die Kräfte auch von der Bewegungsgeschwindigkeit des Pumpenkolbens 22 abhängig. Dies gilt beispielsweise für die dämpfenden Kräfte. Teilsweise sind die Kräfte aber auch von der Beschleunigung des Pumpenkolbens 22 abhängig. Dies gilt beispielsweise für die Massenträgheit. Ein Zusammenhang zwischen den einzelnen Kräften kann daher über Differentialgleichungen hergestellt werden.

Anhand der durch die Spule 17 verursachten elektrischen Kraft kann auf den Druck im Pumpenzylinder 16 über solche Differentialgleichungen geschlossen werden. Die elektrische Kraft, welche durch die Spule 17 ausgeübt wird, kann wiederum aus dem Widerstand 18 der Spule, sowie der an der Spule anliegenden Spannung, sowie weiteren Eigenschaften der Spule 17 bestimmt werden. Auch hierzu sind wieder Differentialgleichungen erforderlich, die die entsprechenden Zusammenhänge wiedergeben. So kann analytisch ein regelungstechnisches Modell entwickelt werden, welches einen Zusammenhang zwischen der Spannung an der Spannungsquelle 21 und dem Druck am Pumpenausgang 24 wiedergibt.

Diese Vorgehensweise ist auch entsprechend auf die gesamte Dosiervorrichtung übertragbar.

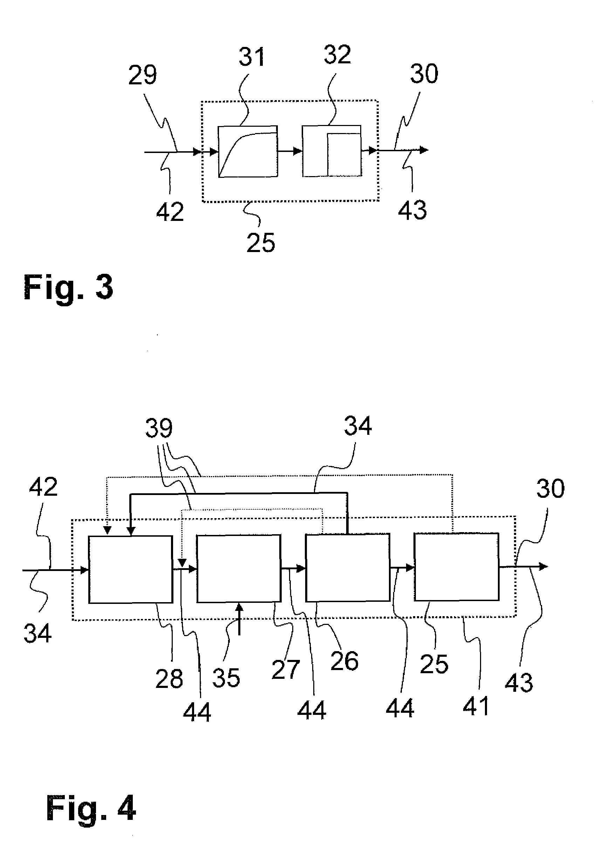

In Fig. 3 ist beispielhaft ein regelungstechnisches Leitungsmodell 25 dargestellt, welches beispielsweise den Zusammenhang zwischen einem Systemdruck 29 in einer Fördervorrichtung als Eingangssignal 42 und dem Injektordruck 30 am Injektor als Ausgangssignal 43 angibt. Vereinfacht dargestellt besteht das Leitungsmodell 25 hier aus einem Verzögerungselement 31 sowie einem Verzögerungszeitelement 32. Das Verzögerungselement 31 gibt wieder, dass ein Druck, welcher am Systemdruck 29 vorliegt, sich in der Leitung zunächst aufgrund der Elastizität der Leitung aufbauen muss. Das Verzögerungszeitelement 32 spiegelt die Länge der Förderleitung wieder. Durch das Verzögerungszeitelement kommt der Systemdruck 29 am Injektor erst zeitlich verzögert an, auch wenn er in der Leitung selbst entsprechend dem Verzögerungselement 31 bereits aufgebaut ist.

In Fig. 4 ist eine komplexere Ausgestaltung eines regelungstechnischen Modells für das Verfahren zur Dosierung dargestellt. Das regelungstechnische Modell gemäß Fig. 4 ist ein vollständiges Systemmodell 41 einer Dosiervorrichtung 1. Dieses Modell besteht aus verschiedenen einzelnen regelungstechnischen Modellen, welche über Wirkzusammenhänge in Beziehung zueinander stehen. Hier dargestellt sind hintereinander ein Steuerungsmodell 28, ein Pumpenmodell 27, ein Dosiersystemmodell 26, sowie ein Leitungsmodell 25. Auf der linken Seite wird ein Eingangssignal 42 in das Systemmodell 41 hineingegeben. Ein solches Eingangssignal 42 kann beispielsweise ein Betriebsparameter 34 sein. Auf der rechten Seite verlässt das Systemmodell 41 ein Ausgangssignal 43, welches der zu ermittelnde Injektordruck 30 ist. Zwischen den einzelnen regelungstechnischen Modellen in dem Systemmodell 41 existieren jeweils Vorwärtskopplungen 44 und Rückkopplungen 39. Des Weiteren wird das Systemmodell an verschiedenen Stellen von Quereinflüssen 35 beeinflusst.

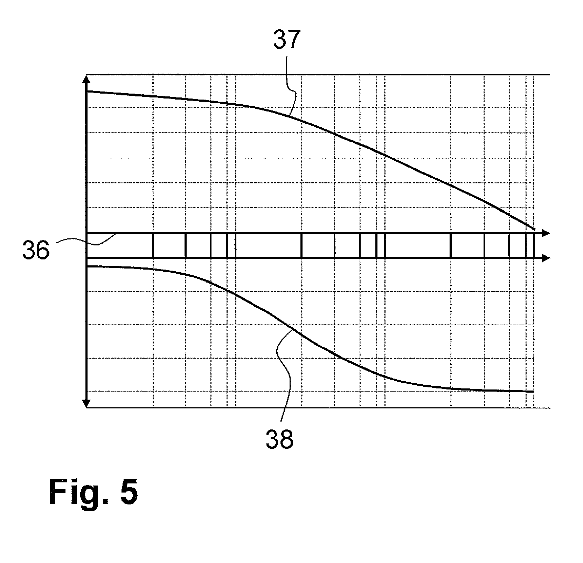

In Fig. 5 ist beispielhaft ein Bode-Diagramm dargestellt, welches einen Zusammenhang zwischen einem Eingangssignal und einem Ausgangssignal wiedergibt. Über eine Frequenzachse 36 ist im oberen Bereich eine Verstärkung 37 dargestellt. Die Frequenzachse 36 ist logarithmisch aufgetragen. Mit steigender Frequenz fällt die Verstärkung ab. Im unteren Bereich ist ebenfalls in Abhängigkeit der Frequenz eine Phasenverschiebung 38 dargestellt. Je höher die Frequenz ist, umso größer wird die Phasenverschiebung.

Hiermit ist es gelungen, die geschilderten technischen Probleme des Stands der Technik weiter zu lindern. Es wurde zudem ein besonders vorteilhaftes Verfahren zur Dosierung von Reduktionsmittel aus einer Dosiervorrichtung in eine Abgasbehandlungsvorrichtung offenbart, durch welches die Genauigkeit und/oder die Gleichmäßigkeit der Dosierung verbessert wird.

### Bezugszeichenliste

- 1: Dosiervorrichtung
- 2: Kraftfahrzeug
- 3: Abgasbehandlungsvorrichtung
- 4: Verbrennungskraftmaschine
- 5: Reduktionsmitteltank
- 6: Filter
- 7: Pumpe
- 8: Rücklaufventil
- 9: Sensor
- 10: Steuergerät
- 11: Leitung
- 12: Injektor
- 13: Zulaufleitung
- 14: Rücklaufleitung
- 15: Ventil
- 16: Pumpenzylinder
- 17: Spule
- 18: Widerstand
- 19: Dämpfer
- 20: Feder
- 21: Spannungsquelle
- 22: Pumpenkolben
- 23: Pumpeneingang
- 24: Pumpenausgang
- 25: Leitungsmodell
- 26: Dosiersystemmodell
- 27: Pumpenmodell
- 28: Steuerungsmodell
- 29: Systemdruck
- 30: Injektordruck
- 31: Verzögerungselement
- 32: Verzögerungszeitelement
- 33: Katalysator
- 34: Betriebsparameter
- 35: Quereinfluss
- 36: Frequenzachse
- 37: Verstärkung
- 38: Phasenverschiebung
- 39: Rückkopplung
- 40: Fördereinheit
- 41: Systemmodell
- 42: Eingangssignal
- 43: Ausgangssignal
- 44: Vorwärtskopplung

## Patentansprüche

1. Verfahren zur Dosierung eines Reduktionsmittels aus einer Dosiervorrichtung (1) in eine Abgasbehandlungsvorrichtung (3) aufweisend zumindest die folgenden Schritte:
a) Bestimmen mindestens eines Betriebsparameters (34) der Dosiervorrichtung (1),
b) Berechnen eines Injektordrucks (30) an einem Injektor (12) zur Zufuhr des Reduktionsmittels in die Abgasbehandlungsvorrichtung (3) aus dem mindestens einen Betriebsparameter (34),
c) Berechnen einer Öffnungszeit für den Injektor (12), wobei zumindest der in Schritt b) ermittelte Injektordruck (30) verwendet wird, und
d) Öffnen des Injektors (12) für die in Schritt c) berechnete Öffnungszeit.

2. Verfahren nach Patentanspruch 1, wobei als Betriebsparameter (34) in Schritt a) zumindest eine Öffnungsdauer und/oder zumindest eine Schließdauer des Injektors (12) verwendet werden.

3. Verfahren nach Patentanspruch 1 oder 2, wobei in Schritt c) zusätzlich ein Öffnungszeitpunkt berechnet wird, und in Schritt d) der Injektor (12) zu dem berechneten Öffnungszeitpunkt geöffnet wird.

4. Verfahren nach Patentanspruch 3, wobei der Öffnungszeitpunkt und der Schließzeitpunkt so festgelegt werden, dass während einer Öffnungszeit zwischen dem Öffnungszeitpunkt und dem Schließzeitpunkt keine von der Pumpe ausgelöste Druckschwankung den Injektor erreicht.

5. Verfahren nach einem der vorhergehenden Patentansprüche, wobei in Schritt b) zumindest eine der folgenden Eigenschaften der Dosiervorrichtung (1) berücksichtigt wird:
- zumindest eine Eigenschaft einer Leitung (11) der Dosiervorrichtung (1) zu dem Injektor (12),
- zumindest eine Eigenschaft einer Fördereinheit (40) der Dosiervorrichtung (1),
- zumindest eine Eigenschaft einer Pumpe (7) der Dosiervorrichtung (1), und
- zumindest eine Eigenschaft eines Steuergerätes (10), welches zur Steuerung der Dosiervorrichtung (1) eingerichtet ist.

6. Verfahren nach Patentanspruch 5, wobei als Eigenschaft der Dosiervorrichtung (1) eine Elastizität und eine Länge der Leitung (11) berücksichtigt werden.

7. Verfahren nach Patentanspruch 6, wobei die für das Verfahren berücksichtigte Elastizität der Leitung (11) regelmäßig angepasst wird, um eine Alterung der Leitung (11) zu berücksichtigen.

8. Verfahren nach Patentanspruch 5, wobei zumindest die Berechnung des Injektordrucks (30) in Schritt b) rückkopplungsfrei erfolgt.

9. Verfahren nach einem der vorhergehenden Patentansprüche, wobei in Schritt c) zur Berechnung der Öffnungszeit zumindest einer der folgenden weiteren Parameter verwendet wird:
- die Temperatur des Reduktionsmittels,
- die Viskosität des Reduktionsmittels,
- zumindest eine physikalische Eigenschaft des Reduktionsmittels,
- zumindest eine chemische Eigenschaft des Reduktionsmittels, und
- eine benötigte Reduktionsmittelmenge.

10. Verfahren nach einem der vorhergehenden Patentansprüche, wobei in Schritt b) zumindest einer der folgenden Parameter als Quereinfluss (35) berücksichtigt wird:
- Füllstand des Reduktionsmittels im Reduktionsmitteltank (5),
- Temperatur des Reduktionsmittels,
- Dichte des Reduktionsmittels,
- Viskosität des Reduktionsmittels,
- zumindest eine physikalische Eigenschaft des Reduktionsmittels,
- zumindest eine chemische Eigenschaft des Reduktionsmittels, und
- eine benötigte Reduktionsmittelmenge.

11. Verfahren zur Einrichtung eines Steuergerätes (10) für eine Dosiervorrichtung (1) zur Dosierung eines Reduktionsmittels in eine Abgasbehandlungsvorrichtung (3), aufweisend zumindest die folgenden Schritte:
a) Entwurf einer Dosiervorrichtung (1) für ein Reduktionsmittel,
b) Zerlegen der Dosiervorrichtung (1) in einzelne Systemkomponenten,
c) Ermitteln von Wirkzusammenhängen zwischen den einzelnen Systemkomponenten,
d) Entwickeln von Modellbeschreibungen der einzelnen Systemkomponenten,
e) Erzeugen eines Systemmodells (41) aus den einzelnen Modellbeschreibungen unter Berücksichtigung der Wirkzusammenhänge, und
f) Einrichtung des Systemmodells (41) in dem Steuergerät (10).

12. Verfahren zur Einrichtung eines Steuergerätes (10) für eine Dosiervorrichtung (1) zur Dosierung eines Reduktionsmittels in eine Abgasbehandlungsvorrichtung (3), umfassend zumindest die folgenden Schritte:
a) Entwurf einer Dosiervorrichtung (1) für ein Reduktionsmittel,
b) Beaufschlagen der Dosiervorrichtung (1) mit einem Eingangssignal (42),
c) Aufzeichnen des Ausgangssignals (43) der Dosiervorrichtung (1) aufgrund des Eingangssignals (42),
d) Entwickeln eines Systemmodells (41), welches einen Zusammenhang zwischen dem Eingangssignal (42) und dem Ausgangssignal (43) herstellt, und
e) Einrichten des Systemmodells (41) in dem Steuergerät (10).

13. Kraftfahrzeug (2) aufweisend eine Verbrennungskraftmaschine (4), eine Abgasbehandlungsvorrichtung (3) zur Reinigung der Abgase der Verbrennungskraftmaschine (4) und eine Dosiervorrichtung (1) zur Dosierung eines Reduktionsmittels in die Abgasbehandlungsvorrichtung (3) sowie ein Steuergerät (10), das zur Durchführung eines Verfahrens gemäß einem der Patentansprüche 1 bis 6 eingerichtet ist.
